# FASCICULE DE BREVET EUROPEEN

(11) **EP 3 372 752 B1**
(45) Date de publication et mention de la délivrance du brevet: **02.08.2023**
(21) Numéro de dépôt: 18160515.5
(22) Date de dépôt: 07.03.2018
(51) Int. Cl.: E04G 23/02, F16B 5/06, E04F 13/08

(54) **ENSEMBLE D'ANCRAGE DESTINÉ À ANCRER À TRAVERS UNE OUVERTURE UNE PORTION DE PAROI SÈCHE PRÉDÉCOUPÉE**
VERANKERUNGSANORDNUNG ZUR VERANKERUNG DURCH EINE ÖFFNUNG EINES VORGESCHNITTENEN TROCKENWANDTEILS
ANCHORING ASSEMBLY FOR ANCHORING THROUGH AN OPENING A PRECUT DRYWALL PORTION

(30) Priorité: 07.03.2017 FR 1751845
(43) Date de publication de la demande: 12.09.2018
(73) Titulaire: Pièces et Accessoires Industriels - P.A.I., 79260 La Crèche (FR)
(72) Inventeur: PAPIN, Edouard, 79000 Niort (FR); LONGEAU, Ludovic, 79170 Vernoux-sur-Boutonne (FR)
(74) Mandataire: Fédit-Loriot

(56) Documents cités:
- WO-A1-00/53854
- US-A- 4 641 474

## Description

La présente invention se rapporte à un ensemble d'ancrage permettant de faciliter le rebouchage d'une ouverture pratiquée dans un panneau de construction.

Il est usuel de pratiquer des ouvertures circulaires au moyen d'une scie cloche dans des panneaux de construction de type plaque de plâtre, ou paroi sèche, pour pouvoir y encastrer des interrupteurs, des boîtiers de prises électriques, des spots lumineux ou tout autre dispositif. Les scies cloches présentent différents diamètres communément utilisés, par exemple 45 mm ou 80 mm. Partant, on obtient des ouvertures d'un diamètre correspondant et on retire une portion de paroi circulaire d'un diamètre sensiblement inférieur.

Dans certaines circonstances, lorsque l'ouverture est par exemple mal positionnée, il est nécessaire de la reboucher. Aussi, il existe des ensembles d'ancrage de différents diamètres permettant de recevoir la portion de paroi circulaire découpée pour pouvoir l'ancrer à travers l'ouverture correspondante et ensuite réagréer le panneau.

On se référera par exemple au document FR 2 982 297, lequel décrit un ensemble d'ancrage comprenant un disque d'appui d'un diamètre correspondant à celui de l'ouverture et quatre languettes de coincement régulièrement réparties à la périphérie et s'étendant perpendiculairement au disque d'appui. Ainsi, la portion de paroi circulaire découpée, d'un diamètre prédéfini, est ajustée à l'intérieur d'un ensemble d'ancrage d'un diamètre correspondant contre le disque d'appui et entre les languettes de coincement. Ces dernières s'étendent alors axialement contre la tranche de la portion de paroi circulaire. La portion de paroi circulaire alors équipée de l'ensemble d'ancrage est présentée, le disque d'appui en regard de l'ouverture, puis est engagée à force axialement à travers cette ouverture. Au fur et à mesure de l'enfoncement, les languettes de coincement sont entraînées axialement contre le bord interne de l'ouverture. En fonction de leur dureté, les languettes de coincement, dont l'épaisseur est sensiblement supérieure à l'espace annulaire qui s'étend radialement entre la portion de paroi circulaire et le bord de l'ouverture, se déforment, mais aussi pénètrent à force dans le matériau de la portion de paroi circulaire et de la paroi elle-même. Lorsque la portion de paroi circulaire atteint sa position finale, dans laquelle ses deux faces opposées sont sensiblement coplanaires aux deux faces opposées de la paroi, respectivement, elle est totalement maintenue en position fixe dans l'épaisseur de la paroi. Celle-ci peut alors être ragréée.

L'ensemble d'ancrage ainsi mis en oeuvre, présente l'inconvénient de ne pouvoir être utilisé que pour une ouverture circulaire et de surcroît, d'un diamètre prédéfini,

US4641474A décrit un ensemble d'ancrage.

Aussi, un problème qui se pose et que vise à résoudre la présente invention est de fournir un ensemble d'ancrage qui puisse non seulement être adapté à différents diamètres d'ouverture mais aussi, qui puisse être mis en oeuvre lorsque l'ouverture est non circulaire, par exemple rectangulaire.

Dans ce but, il est proposé un ensemble d'ancrage destiné à ancrer, à travers une ouverture pratiquée dans une paroi sèche, une portion de paroi sèche prédécoupée présentant la forme de ladite ouverture, ladite portion de paroi sèche présentant une tranche et une face d'appui, tandis que ladite ouverture est délimitée par un bord, ledit ensemble d'ancrage comprenant au moins deux parties d'ancrage présentant une partie d'appui destinée à venir en appui contre ladite face d'appui, et une partie de coincement destinée à venir s'étendre contre ladite tranche en retour de ladite partie d'appui pour pouvoir coincer ladite partie de coincement entre ladite tranche et ledit bord de l'ouverture lorsque ladite portion de paroi sèche est engagée à force à travers ladite ouverture. Lesdites au moins deux parties d'ancrage sont indépendantes l'une de l'autre. Autrement dit, les parties d'ancrage de l'ensemble d'ancrage forment des organes d'ancrage qui ne sont pas liés. Et qui sont identiques.

Ainsi, une caractéristique de l'invention réside dans la mise en oeuvre de parties d'ancrage de l'ensemble d'ancrage indépendantes que l'on vient ajuster, lorsqu'elles sont au nombre de deux par exemple, sur le bord de la portion de paroi circulaire dans deux positions diamétralement opposées. La portion de paroi circulaire équipée des deux parties d'ancrage est alors engagée à force à travers l'ouverture de la paroi. Lorsque la portion de paroi circulaire est enfoncée, sa face d'appui s'appuie sur les parties d'appui des deux parties d'ancrage, et entraîne ainsi axialement en translation les parties de coincement des parties d'ancrage.

De la sorte, quel que soit le diamètre de la portion de paroi circulaire, les parties d'ancrage de l'ensemble d'ancrage, ou organes d'ancrage, peuvent être ajustés pour l'enfoncer à travers l'ouverture de la paroi. Lorsque le diamètre est faible, deux organes d'ancrage, diamétralement opposés, peuvent suffire pour maintenir en position fixe la portion de paroi circulaire à l'intérieur de l'ouverture. En revanche, lorsque le diamètre est plus important, quatre organes d'ancrage, ou parties d'ancrage de l'ensemble d'ancrage, peuvent être installés dans le pourtour de la portion de paroi circulaire, décalés angulairement de 90° les uns des autres, par exemple.

De surcroît, les parties d'ancrage étant indépendantes, elles peuvent également être installées sur une portion de paroi, par exemple rectangulaire. Elles sont alors respectivement ajustées sensiblement au centre des quatre côtés de la portion de paroi.

Aussi, l'ensemble d'ancrage objet de l'invention, permet de réajuster des portions de paroi sèche, quelle que soient leur forme et leur dimension, grâce à la fabrication d'un seul type de pièce. De la sorte, le rebouchage des ouvertures pratiquées dans ces parois sèches, ou cloison, est réalisé à un coût avantageux.

Selon un mode de mise en oeuvre de l'invention particulièrement avantageux, mais non limitatif, ladite partie d'appui de chacune desdites au moins deux parties d'ancrage est formée d'une patte destinée à venir prendre appui sur ladite face d'appui. Ainsi, la patte vient prendre appui localement sur la face d'appui de la portion de paroi. On observera que cette dernière est suffisamment rigide pour entraîner à force la partie d'ancrage par l'intermédiaire de la patte de la partie d'appui. En effet, les efforts qui viennent s'appliquer sur la patte et en réaction à l'opposé localement sur la face d'appui, résultent des forces de frottement de la partie de coincement contre les bords de l'ouverture. Avantageusement, ladite partie d'appui de chacune desdites au moins deux parties d'ancrage est formée d'une seule patte. Ladite seule patte prend appui sur la seule face d'appui. Il n'est nullement nécessaire de prévoir de deuxième patte parallèle apte à prendre appui à l'opposé de la face d'appui de ladite portion de paroi sèche.

Préférentiellement, ladite face d'appui présentant une bordure longeant ladite tranche, ladite partie d'appui prend appui sur ladite bordure.

Selon l' invention, ladite partie d'appui présente des griffes recourbées sensiblement parallèlement à ladite partie de coincement pour pouvoir venir en prise dans ladite face d'appui. De la sorte, la partie d'ancrage, ou organe d'ancrage est préalablement solidarisée à la portion de paroi en engageant à force les griffes à travers le matériau de la portion de paroi. La paroi est usuellement réalisée en plâtre et les griffes de la partie d'appui peuvent aisément y être engagées à force. Pour ce faire, la partie de coincement est appliquée contre la tranche de la portion de paroi et les griffes contre la face d'appui, puis la partie d'ancrage est entraînée axialement à force pour faire pénétrer les griffes dans le matériau de la portion de paroi. Comme on l'expliquera plus en détail ci-après, l'enfoncement des griffes dans la portion de paroi peut se poursuive lors de l'enfoncement de celle-ci à travers l'ouverture, jusqu'à ce que la partie d'appui vienne en appui à plat contre la face d'appui.

Ladite partie de coincement comprend une aile sensiblement perpendiculaire à ladite partie d'appui et au moins une ailette libre étendue en saillie de ladite aile à l'opposé de ladite partie d'appui. De la sorte, ladite au moins une ailette libre permet de découper le bord de l'ouverture lorsque l'aile est entraînée axialement en translation contre le bord de manière à venir s'y incruster. On obtient ainsi une parfaite solidarisation de la portion de paroi et de la paroi.

Avantageusement, ladite au moins une ailette libre présente un bord libre en biseau. De la sorte, l'ailette libre pénètre plus aisément dans le bord de l'ouverture. Ladite partie de coincement comprend deux ailettes libres opposées s'étendant latéralement de ladite aile. Conséquemment, l'aile de la partie d'ancrage est maintenue symétriquement et latéralement entre la tranche de la portion de paroi et le bord de la paroi. Avantageusement, lesdites deux ailettes libres opposées forment respectivement un angle obtus avec ladite aile.

Selon un mode de réalisation particulier de l'invention, lesdites au moins deux parties d'ancrage sont réalisées chacune d'une seule pièce dans un matériau métallique par découpage et emboutissage. Ainsi, grâce à la nature métallique des parties d'ancrage, la pénétration des griffes dans la portion de paroi et des ailettes libres dans la paroi elle-même est facilitée. De surcroît, les parties d'ancrage sont réalisées à un coût très avantageux.

Selon une variante de réalisation, l'ensemble d'ancrage comprend une paire de parties d'ancrage. Selon une autre variante, l'ensemble d'ancrage comprend deux paires de parties d'ancrage, ou organes d'ancrage.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en perspective de trois quarts avant d'un élément de l'invention ;
- la Figure 2 est une vue schématique en perspective de trois quarts arrière de l'élément représenté sur la Figure 1;
- la Figure 3 est une vue schématique en perspective d'une paroi découpée, selon une première variante d'exécution ;
- la Figure 4 est une vue schématique en perspective montrant la mise en oeuvre de l'élément représenté sur la Figure 1 dans une première phase ;
- la Figure 5 est une vue schématique en perspective représentant la mise en oeuvre de l'objet de l'invention dans une deuxième phase ;
- la Figure 6 est une vue schématique en perspective illustrant la paroi telle que représentée sur la Figure 3 et la mise en oeuvre de l'objet de l'invention selon une troisième phase ;
- la Figure 7 est une vue schématique en perspective montrant la mise en oeuvre de l'objet de l'invention dans une quatrième phase ; et,
- la Figure 8 est une vue schématique en perspective illustrant la mise en oeuvre de l'invention selon une autre variante d'exécution.

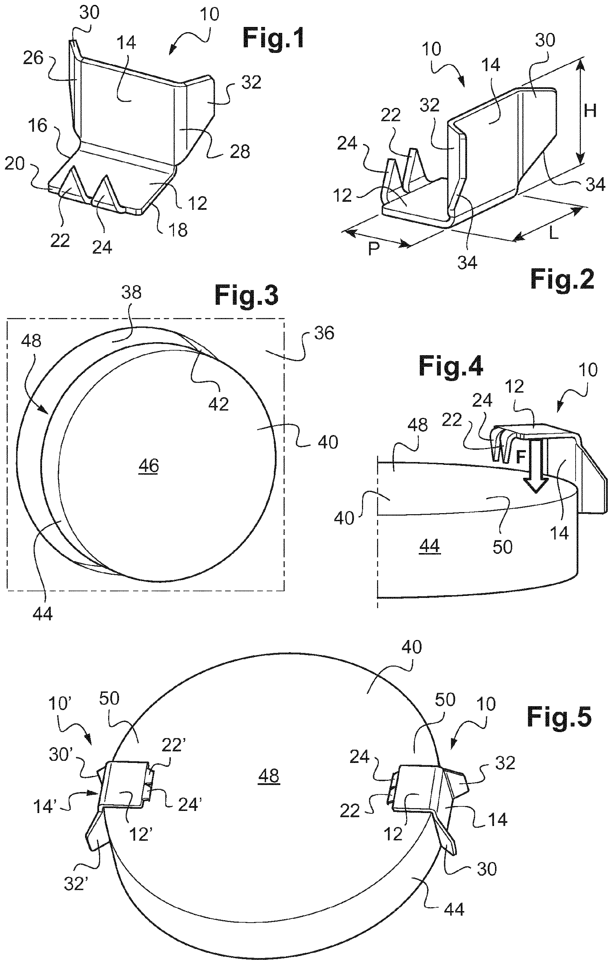

La Figure 1 montre un organe d'ancrage 10 qui, comme on l'expliquera en détail ci-après, en combinaison avec un autre organe d'ancrage identique, constituera une partie d'ancrage d'un ensemble d'ancrage.

L'organe d'ancrage 10 présente une partie d'appui 12, sensiblement rectangulaire et une aile 14, pliée sensiblement perpendiculairement par rapport à la partie d'appui 12. La partie d'appui 12 présente deux bords latéraux d'appui opposés 16, 18 et un bord frontal 20 duquel viennent s'étendre en saillie deux griffes 22, 24 sensiblement parallèlement à l'aile 14. Cette dernière présente deux bords latéraux d'aile opposés 26, 28, qui s'étendent respectivement dans le prolongement des deux bords latéraux d'appui opposés 16, 18 et desquels viennent s'étendre en arrière, à l'opposé de la partie d'appui 12, deux ailettes 30, 32. Aussi, l'aile 14 et ses deux ailettes 30, 32 constituent une partie de coincement dont on expliquera le rôle dans la suite de la description.

On retrouve sur la Figure 2 l'organe d'ancrage 10 en vue de trois quarts arrière. On y retrouve les deux ailettes 30, 32 s'étendant en saillie de l'aile 14 et formant respectivement un angle voisin de 135° avec elle. On observera que les deux ailettes 30, 32 présentent un bord inférieur en biseau 34, s'étendant respectivement à partir des bords latéraux 26, 28 selon un angle voisin de 40° avec ces mêmes bords.

Selon un mode de mise en oeuvre particulier, mais nullement limitatif, la hauteur H de l'organe d'ancrage 10 est comprise entre 10 mm et 15 mm, par exemple entre 10 mm et 12,5 mm, tandis que sa largeur L est comprise entre 10 mm et 14 mm. Selon ce mode particulier, sa profondeur P, correspondant à la partie d'appui 12 est comprise entre 8 mm et 12 mm, tandis que les griffes 22, 24 s'étendent sur une hauteur voisine de 5 mm.

La Figure 3 illustre une plaque de plâtre 36 dans laquelle a été réalisée une découpe au moyen d'une scie cloche de 50 mm de diamètre de manière à obtenir, d'une part une ouverture 38 et d'autre part une portion de paroi circulaire 40. Ainsi, l'ouverture 38 présente un bord interne 42, tandis que la portion de paroi circulaire 40 présente une tranche 44. Le diamètre de l'ouverture 38 est alors sensiblement supérieur à 50 mm, par exemple 50,5 mm, tandis que le diamètre de la portion de paroi circulaire 40 est sensiblement inférieur à 50 mm, par exemple 49,5 mm. La portion de paroi circulaire 40 présent également deux faces opposées, une face avant 46 et une face arrière 48. La plaque de plâtre 36, commercialisée sous les noms de BA13, BA15, BA18, BA25, en fonction de son épaisseur, est constituée de plâtre moulé entre deux couches de carton. Elle peut présenter des propriétés hydrophiles, d'isolation phonique, ou encore ignifuges en fonction des types.

On retrouve partiellement sur la Figure 4 la portion de paroi circulaire 40, et sa face arrière 48 ainsi que sa tranche 44. La Figure 4 montre également l'organe d'ancrage 10 dont l'aile 14 est portée dans une première phase en appui contre la tranche 44 de la portion de paroi circulaire 40, de façon que la partie d'appui 12 vienne s'étendre en regard de la bordure 50 de la face arrière 48. Les griffes 22, 24 sont alors également orientées vers la bordure 50. À partir de cette position, l'organe d'ancrage 10 est alors entraîné en translation axiale selon la flèche F, l'aile 14 en appui contre la tranche 44 de manière à faire pénétrer à force les griffes 22, 24 à travers la portion de paroi circulaire 40. Préférentiellement, on entraîne l'organe d'ancrage 10 jusqu'à ce que la partie d'appui 12 vienne prendre appui contre la bordure 50 de la face arrière 48, dénommée également face d'appui.

On retrouve ainsi sur la Figure 5 l'organe d'ancrage 10 associés à la portion de paroi circulaire 40. La partie d'appui 12 est alors portée en appui contre la bordure 50 de la face arrière 48, tandis que les griffes 22, 24 sont enfoncées à travers la portion de paroi circulaire 40 et que l'aile 14 est en appui tangentiel contre la tranche 44. Partant, les ailettes 30, 32 s'étendent également en saillie de la tranche 44.

Dans une position diamétralement opposée de la portion de paroi circulaire 40 un autre organe d'ancrage 10' totalement identique est installé dans la bordure 50 de la face arrière 48. Sa partie d'appui 12' est en appui contre la bordure 50, tandis que ses griffes 22', 24' sont enfoncées à travers la portion de paroi circulaire 40 et que son aile 14' est en appui tangentiel contre la tranche 44. Ses ailettes 30', 32' s'étendent aussi en saillie de la tranche 44.

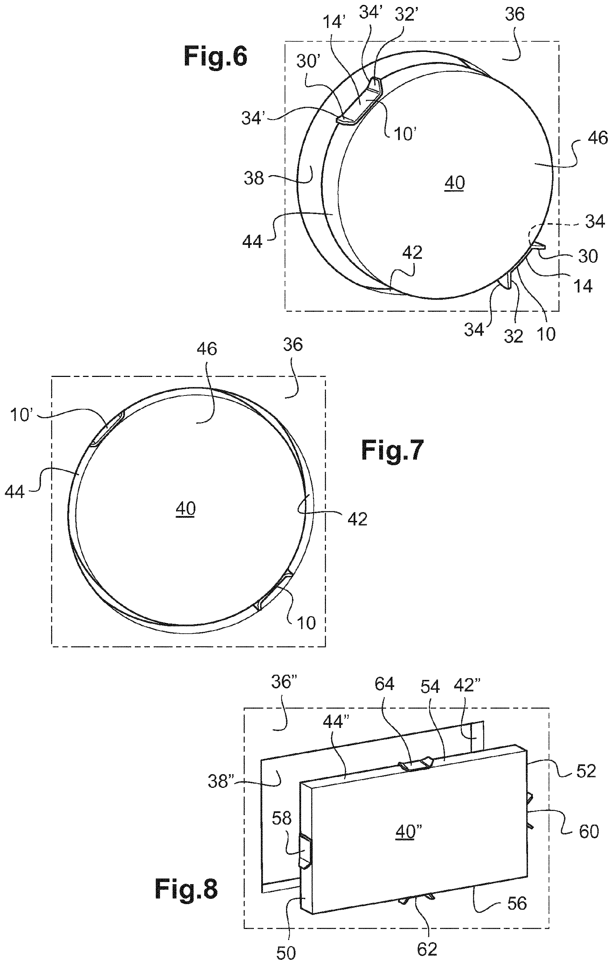

On se reportera à présent sur la Figure 6, illustrant la portion de paroi circulaire 40 équipée des deux organes d'ancrage 10, 10' et présentée en regard de l'ouverture 38 pratiquée dans la plaque de plâtre 36. La portion de paroi circulaire 40 est alors ajustée coaxialement à l'ouverture 38 et elle est portée dans un premier temps de manière à ce que les bords inférieurs en biseau 34, 34' des ailettes 30, 32 ; 30', 32' viennent en contact avec l'arrête circulaire du bord intérieur 42 de l'ouverture 38. Dans cette position, la portion de paroi circulaire 40 est alors enfoncée axialement à force en portant les efforts sur sa face avant 46 de manière à ce que les bords inférieurs en biseau 34, 34' des ailettes 30, 32 ; 30', 32' viennent fendre localement le bord intérieur 42 afin que le corps des ailettes 30, 32 ; 30', 32' viennent s'incruster aisément dans ce bord intérieur 42. Les efforts sont portés plus précisément au niveau des organes d'ancrage 10, 10' afin de faciliter l'enfoncement de la portion de paroi circulaire 40. En effet, ces organes d'ancrage 10, 10' sont entraînés dans l'espace annulaire entre le bord interne 42 de l'ouverture 38 et la tranche 44 de la portion de paroi circulaire 40 grâce à l'appui de la bordure 50 sur les parties d'appui 12. Partant, il est préférable de porter les efforts depuis la face d'appui 46 en regard des parties d'appui 12, 12' de manière à ce que le matériau de la portion de paroi circulaire 40 travail uniquement en compression. La portion de paroi circulaire 40 est alors enfoncée jusqu'à ce que la face avant 46 soit sensiblement coplanaire à la surface de la plaque de plâtre 36 comme illustré sur la Figure 7.

Ainsi, les ailes 14, 14' et respectivement leurs deux ailettes 30, 32 ; 30', 32' constituent les deux parties de coincement permettant de maintenir en position fixe la portion de paroi circulaire 40 à travers l'ouverture 38. Partant, l'espace annulaire entre le bord interne 42 de l'ouverture 38 et la tranche 44 de la portion de paroi circulaire 40 peut être comblée avec de l'enduit et la plaque de plâtre 36 ainsi ragréée.

On se référera à présent à la Figure 8, montrant un autre mode de mise en oeuvre selon lequel, dans une autre plaque de plâtre 36", a été réalisée une découpe rectangulaire au moyen d'une scie de manière à obtenir d'une part une ouverture rectangulaire 38" et d'autre part une portion de paroi rectangulaire 40". Ainsi, l'ouverture rectangulaire 38" présente un bord interne rectangulaire 42", tandis que la portion de paroi rectangulaire 40" présente une autre tranche 44".

La portion de paroi rectangulaire 40" présente ainsi quatre côtés, deux petits côtés opposés 50, 52 et deux grands côtés opposés 54, 56. Aussi, les deux petits côtés opposés 50, 52 reçoivent respectivement deux organes d'ancrage 58, 60, du type représenté sur les Figures 1 et 2, sensiblement à équidistance des deux grands côtés 54, 56. Et les deux grands côtés opposés 54, 56, reçoivent respectivement deux autres organes d'ancrage 62, 64 du même type et sensiblement à équidistance des deux petits côtés 50, 52.

Partant, la portion de paroi rectangulaire 40" va pouvoir être engagée à force à travers l'ouverture rectangulaire 38", tandis que les parties de coincement respectivement, des organes d'ancrage 58, 60, 62, 64 vont venir se coincer entre la tranche 44" et le bord interne rectangulaire 42" de l'ouverture 38", tout comme pour la portion de paroi circulaire 40 représentée sur la Figure 7.

## Revendications

1. Ensemble d'ancrage destiné à ancrer, à travers une ouverture (38 ; 38") pratiquée dans une paroi sèche (36, 36"), une portion de paroi sèche (40 ; 40") prédécoupée présentant la forme de ladite ouverture (38 ; 38"), ladite portion de paroi sèche (40 ; 40") présentant une tranche (44 ; 44") et une face d'appui (48), tandis que ladite ouverture (38 ; 38") est délimitée par un bord (42 ; 42"), ledit ensemble d'ancrage comprenant au moins deux parties d'ancrage (10, 10' ; 58, 60, 62, 64) présentant une partie d'appui (12, 12') sensiblement rectangulaire destinée à venir en appui contre ladite face d'appui (48), et une partie de coincement (14, 30, 32 ; 14', 30', 32') destinée à venir s'étendre contre ladite tranche (44 ; 44") en retour de ladite partie d'appui (12, 12') pour pouvoir coincer ladite partie de coincement (14, 30, 32 ; 14', 30', 32') entre ladite tranche (44 ; 44") et ledit bord (42 ; 42") de l'ouverture lorsque ladite portion (40, 40") de paroi sèche est engagée à force à travers ladite ouverture (38, 38"), lesdites au moins deux parties d'ancrage (10, 10' ; 58, 60, 62, 64) étant indépendantes l'une de l'autre, tandis que ladite partie d'appui (12, 12') présente des griffes (22, 24, 22', 24') recourbées sensiblement parallèlement à ladite partie de coincement (14, 30, 32 ; 14', 30', 32') pour pouvoir venir en prise dans ladite face d'appui (48), ladite partie de coincement (14, 30, 32 ; 14', 30', 32') comprenant une aile (14, 14') sensiblement perpendiculaire à ladite partie d'appui (12, 12'), ladite partie d'appui présentant deux bords latéraux d'appui opposés (16, 18) et un bord frontal (20) duquel viennent s'étendre en saillie lesdites griffes (22, 24) sensiblement parallèlement à l'aile (14), ladite aile (14) présentant deux bords latéraux d'aile opposés (26, 28) s'étendant respectivement dans le prolongement des deux bords latéraux d'appui opposés (16, 18) ;
**caractérisé en ce que** ladite partie de coincement (14, 30, 32 ; 14', 30', 32') comprend deux ailettes libres opposées (30, 32, 30', 32') s'étendant desdits deux bords latéraux d'aile opposés (26, 28) en arrière et en saillie de ladite aile (14, 14') à l'opposé de ladite partie d'appui (12, 12').

2. Ensemble d'ancrage selon la revendication 1, **caractérisé en ce que** lesdites deux ailettes (30, 32) s'étendent en saillie de l'aile (14) en formant respectivement un angle voisin de 135° avec elle, et **en ce que** les deux ailettes présentent un bord inférieur en biseau (34), s'étendant respectivement à partir des bords latéraux (26, 28) selon un angle voisin de 40° avec ces mêmes bords.

3. Ensemble d'ancrage selon la revendication 1 ou 2, **caractérisé en ce que** ladite partie d'appui (12, 12') de chacune desdites au moins deux parties d'ancrage (10, 10' ; 58, 60, 62, 64) est formée d'une patte destinée à venir prendre appui sur ladite face d'appui (48).

4. Ensemble d'ancrage selon la revendication 3, **caractérisé en ce que** ladite partie d'appui (12, 12') de chacune desdites au moins deux parties d'ancrage (10, 10' ; 58, 60, 62, 64) est formée d'une seule patte.

5. Ensemble d'ancrage selon l'une quelconque des revendications 1 à 4, **caractérisé en ce que** ladite face d'appui (48) présentant une bordure (50) longeant ladite tranche (44), ladite partie d'appui (12) prend appui sur ladite bordure (50).

6. Ensemble d'ancrage selon l'une quelconque des revendications 1 à 5, **caractérisé en ce que** lesdites deux ailettes libres opposées (30, 32, 30', 32') forment respectivement un angle obtus avec ladite aile (14, 14').

7. Ensemble d'ancrage selon l'une quelconque des revendications 1 à 6, **caractérisé en ce que** lesdites au moins deux parties d'ancrage (10, 10') sont réalisées chacune d'une seule pièce dans un matériau métallique par découpage et emboutissage.

8. Ensemble d'ancrage selon l'une quelconque des revendications 1 à 7, **caractérisé en ce qu'**il comprend une paire de parties d'ancrage (10, 10').

## Patentansprüche

1. Anordnung zur Verankerung, die dazu bestimmt ist, durch eine Öffnung (38; 38") in einer Trockenwand (36, 36'') einen vorgeschnittenen Abschnitt der Trockenwand (40; 40'') zu verankern der die Form der Öffnung (38; 38") aufweist, wobei der Abschnitt der Trockenwand (40; 40") eine Kante (44; 44") und eine Auflagefläche (48) aufweist, während die Öffnung (38; 38") von einer Kante (42; 42") begrenzt wird, wobei die Anordnung zur Verankerung mindestens zwei Verankerungsteile (10, 10'; 58, 60, 62, 64) umfasst, die ein im Wesentlichen rechteckiges Auflageteil (12, 12'), das dazu bestimmt ist, gegen die Auflagefläche (48) zur Auflage zu kommen, und ein Klemmteil (14, 30, 32; 14', 30', 32') aufweisen, das dazu bestimmt ist, sich gegen die Kante (44; 44") in Umkehrung des Auflageteils (12, 12') zu erstrecken, um das Klemmteil (14, 30, 32; 14', 30', 32') zwischen der Kante (44; 44") und dem Rand (42; 42") der Öffnung einklemmen zu können, wenn der Abschnitt (40, 40") der Trockenwand mit Kraft durch die Öffnung (38, 38") in Eingriff gebracht wird, wobei die mindestens zwei Verankerungsteile (10, 10'; 58, 60, 62, 64) unabhängig voneinander sind, während das Auflageteil (12, 12') Zinken (22, 24, 22', 24') aufweist, die im Wesentlichen parallel zu dem Klemmteil (14, 30, 32; 14', 30', 32') gekrümmt sind, um in die Auflagefläche (48) eingreifen zu können, wobei das Klemmteil (14, 30, 32; 14', 30', 32') einen Flügel (14, 14') umfasst, der im Wesentlichen senkrecht zu dem Auflageteil (12, 12') verläuft, wobei das Auflageteil zwei gegenüberliegende seitliche Auflagekanten (16, 18) und eine Vorderkante (20) aufweist, von der sich die Zinken (22, 24) im Wesentlichen parallel zum Flügel (14) vorspringend erstrecken, wobei der Flügel (14) zwei gegenüberliegende Flügelseitenkanten (26, 28) aufweist, die sich jeweils in Verlängerung der beiden gegenüberliegenden Auflagekanten (16, 18) erstrecken;
**dadurch gekennzeichnet, dass** das Klemmteil (14, 30, 32; 14', 30', 32') zwei gegenüberliegende freie Flügel (30, 32, 30', 32') umfasst, die sich von zwei gegenüberliegenden Flügelseitenkanten (26, 28) nach hinten erstrecken und von dem Flügel (14, 14') gegenüber dem Auflageteil (12, 12') vorspringen.

2. Anordnung zur Verankerung nach Anspruch 1, **dadurch gekennzeichnet, dass** die beiden Flügel (30, 32) sich vorspringend vom Flügel (14) erstrecken, indem sie jeweils einen Winkel von etwa 135° mit diesem bilden, und dass die beiden Flügel eine abgeschrägte untere Kante (34) aufweisen, die sich jeweils von den Seitenkanten (26, 28) aus in einem Winkel von etwa 40° mit diesen gleichen Kanten erstreckt.

3. Anordnung zur Verankerung nach Anspruch 1 oder 2, **dadurch gekennzeichnet, dass** das Auflageteil (12, 12') jedes der mindestens zwei Verankerungsteile (10, 10'; 58, 60, 62, 64) von einer Klammer gebildet wird, die dazu bestimmt ist, sich auf der Auflagefläche (48) abzustützen.

4. Anordnung zur Verankerung nach Anspruch 3, **dadurch gekennzeichnet, dass** das Auflageteil (12, 12') von jedem der mindestens zwei Verankerungsteile (10, 10'; 58, 60, 62, 64) aus einer einzigen Klammer gebildet ist.

5. Anordnung zur Verankerung nach einem der Ansprüche 1 bis 4, **dadurch gekennzeichnet, dass** die Auflagefläche (48) einen Rand (50) aufweist, der entlang der Kante (44) verläuft, wobei sich das Auflageteil (12) an dem Rand (50) abstützt.

6. Anordnung zur Verankerung nach einem der Ansprüche 1 bis 5, **dadurch gekennzeichnet, dass** die beiden gegenüberliegenden freien Flügel (30, 32, 30', 32') jeweils einen stumpfen Winkel mit dem Flügel (14, 14') bilden.

7. Anordnung zur Verankerung nach einem der Ansprüche 1 bis 6, **dadurch gekennzeichnet, dass** die mindestens zwei Verankerungsteile (10, 10') jeweils einstückig aus einem metallischen Material durch Stanzen und Tiefziehen hergestellt sind.

8. Anordnung zur Verankerung nach einem der Ansprüche 1 bis 7, **dadurch gekennzeichnet, dass** sie ein Paar von Verankerungsteilen (10, 10') umfasst.

## Claims

1. An anchor assembly for anchoring, through an opening (38; 38'') provided in a dry wall (36, 36"), a precut dry wall portion (40; 40'') having the shape of said opening (38; 38"), said dry wall portion (40; 40'') having an edge (44; 44") and a bearing face (48), whereas said opening (38; 38") is delimited by a rim (42; 42"), said anchor assembly comprising at least two anchor parts (10, 10'; 58, 60, 62, 64) having a substantially rectangular bearing part (12, 12') for bearing against said bearing face (48), and a wedge part (14, 30, 32; 14', 30', 32') for extending against said edge (44; 44") back from said bearing part (12, 12') to be able to wedge said wedge part (14, 30, 32; 14', 30', 32') between said edge (44; 44'') and said rim (42; 42") of the opening when said dry wall portion (40; 40") is force-fitted through said opening (38; 38"), said at least two anchor parts (10, 10'; 58, 60, 62, 64) being independent of one another, whereas said bearing part (12, 12') has claws (22, 24, 22', 24') bent substantially in parallel to said wedge part (14, 30, 32; 14', 30', 32') to be able to be engaged in said bearing face (48), said wedge part (14, 30, 32; 14', 30', 32') comprising a leg (14, 14') substantially perpendicular to said bearing part (12, 12'), said bearing part having two opposite bearing side rims (16, 18) and a front rim (20) from which said claws (22, 24) projectingly extend substantially in parallel to the leg (14), said leg (14) having two opposite leg side rims (26, 28) respectively extending as an extension of both opposite bearing side rims (16, 18);
**characterised in that** said wedge part (14, 30, 32; 14', 30', 32') comprises two opposite free fins (30, 32, 30', 32') extending from said two opposite leg side rims (26, 28) backwards and projecting from said leg (14, 14') opposite to said bearing part (12, 12').

2. The anchor assembly according to claim 1, **characterised in that** said two fins (30, 32) projectingly extend from the leg (14) respectively forming an angle close to 135° with the same, and **in that** the two fins have a bevelled lower rim (34), respectively extending from the side rims (26, 28) at an angle close to 40° with these same rims.

3. The anchor assembly according to claim 1 or 2, **characterised in that** said bearing part (12, 12') of each of said at least two anchor parts (10, 10'; 58, 60, 62, 64) is formed by a tab for bearing against said bearing face (48).

4. The anchor assembly according to claim 3, **characterised in that** said bearing part (12, 12') of each of said at least two anchor parts (10, 10'; 58, 60, 62, 64) is formed by a single tab.

5. The anchor assembly according to any of claims 1 to 4, **characterised in that** said bearing face (48) having a border (50) running along said edge (44), said bearing part (12) bears against said border (50).

6. The anchor assembly according to any of claims 1 to 5, **characterised in that** said two opposite free fins (30, 32, 30',32') respectively form an obtuse angle with said leg (14, 14').

7. The anchor assembly according to any of claims 1 to 6, **characterised in that** said at least two anchor parts (10, 10') are each made as a single piece of a metal material by cutting and drawing.

8. The anchor assembly according to any of claims 1 to 7, **characterised in that** it comprises a pair of anchor parts (10, 10').
